# EUROPEAN PATENT SPECIFICATION

(11) **EP 4 566 202 B1**
(45) Date of publication and mention of the grant of the patent: **21.10.2026**
(21) Application number: 23745566.2
(22) Date of filing: 28.07.2023
(51) Int. Cl.: H04B 10/112, H04B 10/114

(54) **FAST TARGET ACQUISITION FOR STEERABLE LIGHT BEAMS IN OPTICAL WIRELESS COMMUNICATION SYSTEMS**
SCHNELLE ZIELERFASSUNG FÜR LENKBARE LICHTSTRAHLEN IN OPTISCHEN DRAHTLOSEN KOMMUNIKATIONSSYSTEMEN
ACQUISITION RAPIDE DE CIBLE POUR DES FAISCEAUX DE LUMIÈRE ORIENTABLES DANS DES SYSTÈMES DE COMMUNICATION FIL OPTIQUES SANS FIL

(30) Priority: 04.08.2022 EP 22188827
(43) Date of publication of application: 11.06.2025
(73) Proprietor: Signify Holding B.V., 5656 AE Eindhoven (NL)
(72) Inventor: LINNARTZ, Johan-Paul, Marie, Gerard, 5656 AE Eindhoven (NL)
(74) Representative: Verweij, Petronella Daniëlle
(86) International application number: PCT/EP2023/070949
(87) International publication number: WO 2024/028212

(56) References cited:
- WO-A1-02/087117
- WO-A2-02/086555

## Description

### FIELD OF THE INVENTION

The invention relates to the field of communication in optical wireless networks, such as - but not limited to - optical wireless communication (OWC) or free-space optical (FSO) communication, for use in various different applications indoors, e.g., for home, office, retail, hospitality and industry, or outdoors, e.g. in car to X, (to infrastructure, to other cars,...) or in military applications. The invention can be used for communication between the infrastructure and end nodes but also as part of a communications link in an infrastructure, such as between satellites, airplanes, and ground stations.

### BACKGROUND OF THE INVENTION

FSO is an optical communication technology that uses propagation of visible or invisible radiation in free space to wirelessly transmit data for telecommunications or computer networking. "Free space" means air, outer space, vacuum, or something similar. Free-space point-to-point optical links may be implemented using infrared laser light, although low-data-rate communication over short distances may as well be possible using LEDs. Infrared data association (IrDA) technology is a very simple form of FSO communications. On the communications side, the FSO technology is considered as a part of OWC applications.

OWC networks, such as Li-Fi networks (named like Wi-Fi networks), enable mobile user devices (called end points (EP) in the following) like laptops, tablets, smartphones or the like to connect wirelessly to the internet or other data communication networks. Wi-Fi achieves this using radio frequencies, but Li-Fi achieves this using the visible and non-visible light spectrum (including ultraviolet (UV) and infrared (IR) light) which can enable unprecedented data transfer speed and bandwidth. Furthermore, it can be used in areas susceptible to electromagnetic interference.

Based on modulations, information embedded in the coded light can be detected using any suitable light sensor. This can be a dedicated photocell (point detector), an array of photocells possibly with a lens, reflector, diffuser of phosphor converter, or a camera comprising an array of photocells (pixels) and a lens for forming an image on the array. E.g., the light sensor may be a dedicated photocell included in a dongle which plugs into the EP, or the sensor may be a general purpose (visible or infrared light) camera of the EP or an infrared detector initially designed for instance for 3D face recognition. Either way this may enable an application running on the EP to receive data via the light.

LiFi devices may be integrated in luminaires of illumination systems to provide high-speed wireless connectivity over large spaces, such as meeting rooms and office floors. There is seamless handover between each LiFi-enabled luminaire enabling users to roam around. As an example, a USB-access key plugged into a laptop can be used to receive a LiFi signal and act as an emitter to send data back to the luminaire.

Furthermore, fixed point-to-point systems may be provided, which act like a wireless cable for connecting devices. Potential applications include connecting robots or machines in radio frequency (RF) harsh environments like industrial plants, or hospitals where RF communications may not be permitted, or where there is a need to send and receive large data files securely and quickly.

A further broad field of FSO is in outdoor communications links. For instance, in smart mobility applications, communication links with moving cars are needed. In military operations, communication without radio signals has advantages, as directed laser beams can avoid detection and can restrict the area in which signals can be intercepted. To communicate between satellites, airplanes, and ground stations a laser beam can be used to cover large distances and nonetheless allow very high bit rates. In the example of a satellite of airplane with a position that is initially unknown to the communication such that there is an uncertainty in a range of kilometers, finding the right direction for a laser beam within a range of centimeters can be (too) time consuming.

In optical wireless communication with steerable light beams (e.g., laser beams), it is a challenge to ensure that the light beam is sent in the right direction to reach a counter station. Therefore, acquisition (i.e., a process of finding the counter station with the light beam from an initial situation where relative positions and direction are unknown) and tracking (i.e., a process of maintaining accurate directions of the light beam despite vibrations or noise starting from a situation that the correct direction is already known) are distinguished.

A commonly encountered situation is that a transmitter system emits a narrow beam in a scan (acquisition) mode. This beam can have a high bit rate but only covers a narrow area. A return channel, in acquisition mode is not (yet) established and/or has much lower bandwidth and/or has very asymmetric latency and/or has a limiting timing resolution. This may hamper link establishment speed if the transmitter system needs to wait for a feedback message (or for a time out when the forward beam does not hit the counter station), which delays the processing of finding a direction lock.

International patent application WO02/086555 A2 discloses a method for aligning optical wireless links using feedback information that is transmitted over the light beams being aligned. Each link performs an acquisition routing in which its light beam is wept through a pre-defined patterns while transmitting its beam alignment information. The alignment information may be a control packet that contains the position of the transmitting beam, i.e. the x and y coordinates relative to some reference point. When a link receives beam alignment information from a remote link, it updates its transmission to include the alignment information received from the remote link. As a result, at some point the remote link will receive its own alignment information "echoed" back and will align its beam accordingly.

### SUMMARY OF THE INVENTION

It is an object of the present invention to provide an accelerated acquisition scheme for OWC or FSO networks.

This object is achieved by a source apparatus as claimed in claim 1, by an OWC device as claimed in claim 8, an OWC system as claimed in claim 11, and by a method as claimed in claim 12.

According to a first aspect, a source apparatus for controlling an acquisition of a target receiver by a steered beam for optical wireless communication is provided, wherein the source apparatus is configured to:
- add to the steered beam an address information indicating a current direction or position of the steered beam;
- control a mixed-type or linear feedback shift register with a length L and a sequence length 2^{L}-1 to generate a pseudo-random sequence;
- scan by the steered beam a scanning area along a trajectory while outputting a continuous stream of bits of the pseudo-random sequence; and
- derive a position of the target receiver based on an address information received from the target receiver in a hit report via a feedback channel and
wherein every bit sequence of length L uniquely designates a different beam position along the trajectory.

According to a second aspect, an OWC device is provided comprising a source apparatus according to the first aspect and a target apparatus for setting up a communication with a further source apparatus at the target receiver via a further steered beam for optical wireless communication, wherein the target apparatus is configured to:
determine a detection of the further steered beam by a photo detector during an acquisition scanning phase;
derive from the detection an address information embedded in the further steered beam and indicating a current direction or position of the further steered beam; and
transmit the derived address information to the further source apparatus in a further hit report via a feedback channel and
wherein the address information is derived by reading a predetermined number of adjacent bits from the detection, the predetermined number of adjacent bits representing a pseudo-random sequence indicative of a beam position along a trajectory embedded by the further source apparatus, and where the predetermined number is at least the log base 2 of the length of the pseudo-random sequence.

Such an OWC device will be able to transmit via a steered beam with address information and receive a confirmation of reception from another device over a feedback channel. The OWC device may, either at the same time (or sequentially), use the target apparatus to provide confirmation of reception over a feedback channel when it detects a steered beam with address information from another device. Two devices in accordance with this optional feature may thus, jointly, when in line-of-sight of one another, align and set-up a high-speed *bi-directional* communication link.

According to a third aspect, an OWC system is provided, which comprises a first OWC device with a source apparatus according to the first aspect and a second OWC device comprising a further target apparatus for setting up a communication with the first OWC device via the steered beam. The further target apparatus is configured to: determine a detection of the steered beam by a photo detector during an acquisition scanning phase; derive from the detection an address information embedded in the steered beam and indicating a current direction or position of the steered beam; and transmit the derived address information to the source apparatus in the hit report via the feedback channel; and wherein the address information is derived by reading a predetermined number of adjacent bits from the detection, the predetermined number of adjacent bits representing a pseudo-random sequence indicative of a beam position along a trajectory embedded by the source apparatus, and where the predetermined number is at least the log base 2 of the length of the pseudo-random sequence.

According to a fourth aspect, a method of controlling an acquisition of a target receiver by a steered beam originating from a source apparatus of an OWC device for optical wireless communication is provided, wherein the method comprises the source apparatus:
- adding to the steered beam an address information indicating a current direction or position of the steered beam;
- controlling a mixed-type or linear feedback shift register with a length L and a sequence length 2^{L}-1 to generate a pseudo-random sequence;
- scanning by the steered beam a scanning area along a trajectory while outputting a continuous stream of bits of the pseudo-random sequence; and
- deriving a position of the target receiver based on an address information received from the target receiver in a hit report via a feedback channel and
wherein every bit sequence of length L uniquely designates a different beam position along the trajectory.

Optionally, the OWC device used in a method in accordance with the fourth aspect further comprises a target apparatus and the method further comprises the target apparatus:
- determining a detection of a further steered beam from a further source apparatus of the target receiver by a photo detector during an acquisition scanning phase;
- deriving from the detection an address information embedded in the further steered beam and indicating a current direction or position of the further steered beam; and
- transmitting the derived address information to the further source transmitter in a further hit report via a feedback channel and
wherein the address information is derived by reading a predetermined number of adjacent bits from the detection, the predetermined number of adjacent bits representing a pseudo-random sequence indicative of a beam position along a trajectory embedded by the further source apparatus, and where the predetermined number is at least the log base 2 of the length of the pseudo-random sequence.

Accordingly, a very effective and efficient acquisition solution can be provided, which enables a fast way of establishing a directional hit without being hampered by latency in the return channel. The address information related to the directional hit may indicate a position in a coverage area or a direction towards the hit detector. The scanning trajectory can be determined based on a predetermined scanning pattern or even "randomly" as long as the trajectory is continuous and a known relation between the trajectory and related directions and address information is ensured.

The easily generated pseudo-random sequence can be used as a continuously running source of address identifications which are successively added to the steered beam. This provides an efficient and effective direction-related addressing option. An advantage of this approach is that as there is no explicit "start of a message" and/or "end of a message", a detection can start at any point within the pseudo-random sequence. As a result, the pseudo-random sequence can be emitted as a continuous signal of bits during a continuous scan and does not necessitate the emission of discrete packets of location address information at discrete locations.

According to a first option of any of the first to fourth aspects, the scanning by the steered beam may be continued without waiting for the receipt of the hit report or absence thereof. As the address information provides the information required to determine the direction where the signal was received, there is no longer a need to wait for the hit report. Thereby, an accelerated scanning phase can be achieved and the direction(s) of (the) hit detector(s) can be locked after receipt of the hit report(s).

According to a second option of the second or third aspects, which may be combined with the first option, the receiving end may be configured to derive the address information of the detected steered beam by reading a predetermined number of adjacent bits, where the predetermined number is at least the log base 2 of the length of the pseudo-random sequence. This ensures that a sufficient number of bits are read to derive and feed-back an unambiguous direction of the steering beam.

According to a third option of the second or third aspects, which may be combined with the second option, more than the predetermined number of bits may be captured at the receiving end due to a capturing area of the photo detector, that is larger than a minimum capturing area, so that available excessive bits can be used for error correction or for detecting a more specific position of the photo detector within a beam coverage area of the steered beam. Thereby, a more reliable and accurate feedback of the direction-related address information can be achieved.

According to a fourth option of any of the first to fourth aspects, which may be combined with any of the first to third options, the steered beam may be generated with a wider beam coverage area than that used for communication with the target receiver after the acquisition. This measure allows a faster acquisition process, as the scanning area can be covered with a shorter trajectory.

According to a fifth option of any of the first to fourth aspects, which may be combined with any of the first to fourth options, the number of bits of the address information may be set at least to log₂(A_{C}/A_{B}), wherein A_{C} denotes the size of the scanning area and A_{B} denotes the size of a coverage area of the steered beam. Thereby, the length of the address information can be optimized in the light of the scanning parameters to obtain an efficient acquisition process. In an example, when a target device receives a signal, but is unable to successfully extract the address information (e.g., no bits, unable to properly verify a checksum (if this is present)) it may indicate this over the feedback channel (e.g., "I saw something, but couldn't recover the address info"). This may then allow the source apparatus to perform a slower pass along the same path.

According to a sixth option of any of the first to fourth aspects, which may be combined with any of the first to fifth options, the scanning speed of the steered beam may be set to 0.7 beam radii of the steered beam per duration of the address information. This measure ensures that scanning speed of the steered beam can be optimized in the light of the scanning parameters to obtain an efficient acquisition process.

According to a seventh option of any of the first to fourth aspects, which may be combined with any of the first to sixth options, the trajectory may be dynamically selected based on prior address information stored in a memory. Thereby, prior knowledge of target receiver positions can be used to shorten the acquisition time.

According to an eighth option of the second aspect, which may be combined with other options of the second aspect, the source apparatus may comprise a position actuator element having at least one galvanometer mirror for steering the steered beam. Thereby, an efficient beam steering process with integrated direction sensing option can be provided.

It is noted that the above source and target apparatuses may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the source apparatus of claim 1, the OWC device of claim 8, the optical wireless communication system of claim 11, and the method of claim 12 may have similar and/or identical preferred embodiments, in particular, as defined in the dependent claims.

These and other aspects of the invention will be apparent from and elucidated with reference to the embodiments described hereinafter.

### BRIEF DESCRIPTION OF THE DRAWINGS

In the following drawings:
Fig. 1 shows schematically a communication link of an optical communication system prior to acquisition;
Fig. 2 shows schematically an architecture of a wireless optical system with a beam scanning area, a steerable beam width and a capturing area;
Fig. 3 shows a pseudorandom sequence with a detector window and a minimum window for fast acquisition;
Fig. 4 shows schematically a block diagram of an optical wireless communication system with fast acquisition function according to an embodiment;
Fig. 5 shows schematically a sequence of beam coverage areas with address IDs along a beam scanning trajectory;
Fig. 6 shows schematically a sequence of beam coverage areas and related sub-areas along a beam scanning trajectory;
Fig. 7 shows schematically a sequence of beam coverage areas and related sub-areas along a beam scanning trajectory and distances required for determining an optimum scan speed;
Fig. 8 shows schematically a block diagram of an exemplary linear-feedback shift register;
Fig. 9 shows a table of output values of the linear-feedback shift register of Fig. 8;
Fig. 10 shows schematically a sequence of beam coverage areas and related symbols along a beam scanning trajectory;
Fig. 11 shows a flow diagram of a fast acquisition procedure at a transmitter according to an embodiment; and
Fig. 12 shows a flow diagram of a fast acquisition procedure at a receiver according to an embodiment.

### DETAILED DESCRIPTION OF EMBODIMENTS

Various embodiments of the present invention are now described based on an OWC system with OWC, FSO or LiFi communication devices.

Throughout the following, LiFi, FSO and OWC are used interchangeable and light source or optical transmitter may be understood as a radiation source that generates visible or non-visible light (i.e., including infrared (IR) or ultraviolet (UV)) for communication or other purposes (e.g. safety/security light barriers). Light source suitable for OWC applications may vary from application to application and might be selected based on application needs, such as bandwidth, cost or power budget. Often used light sources in OWC systems are for example Light Emitting Diodes (LEDs), a Vertical Cavity Surface Emitting Lasers (VCSELs), or other types of laser sources; optionally fitted with suitable optics so as to achieve a desired emission field-of-view. The light source may be included in a luminaire, such as a recessed or surface-mounted incandescent, fluorescent or other electric-discharge luminaires.

The underlying idea of LiFi communication is to provide a line of sight between LiFi devices. As a result, the LiFi infrastructure needs to be well positioned or aligned to provide optical wireless communication that requires line of sight.

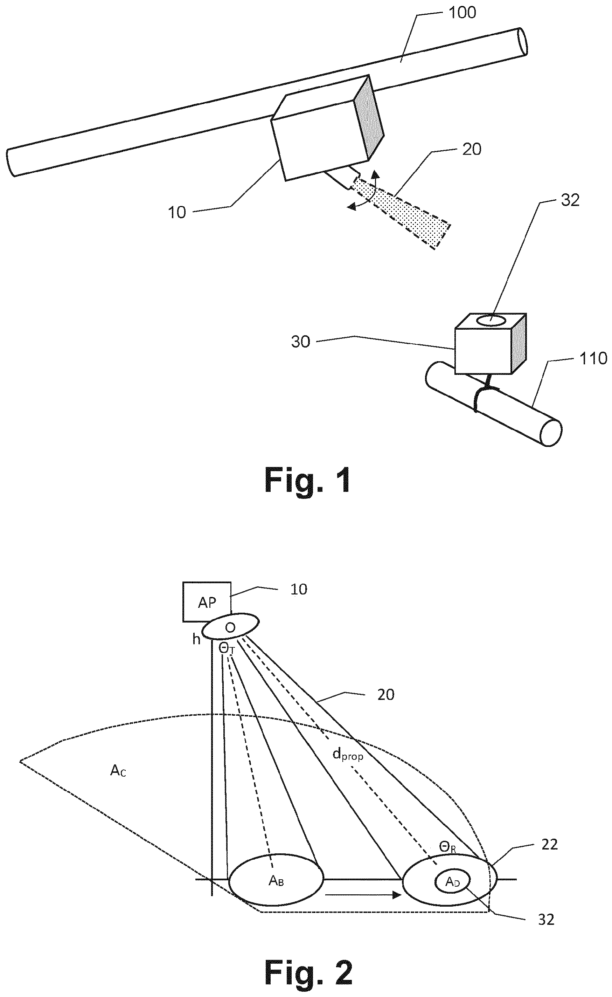

Fig. 1 shows schematically a communication link between a first LiFi device 10 (e.g., an AP) with steerable light beam 20 and a second LiFi device 30 with optical detector and detection area 32 prior to acquisition.

It is noted that - throughout the present disclosure - the structure and/or function of blocks with identical reference numbers that have been described before are not described again, unless an additional specific functionality is involved. Moreover, only those structural elements and functions are shown, which are useful to understand the embodiments. Other structural elements and functions are omitted for brevity reasons.

The optical communication link of Fig. 1 is to be installed or setup between the first LiFi device 10 with steerable light beam 20 (movably) mounted at a first shelf 100 or another mounting facility and a second LiFi device 30 (movably) mounted at a second shelf 110 or another mounting facility. The second LiFi device 30 comprises an optical detector with detection area 32.

Alternatively, at least one of the first and second LiFi devices 10, 30 may be a mobile device that can be carried and/or operated by a user.

As a further option, the first and second LiFi devices may belong to a LiFi network that comprises multiple APs, e.g. luminaires of a lighting system, connected to a backbone network (e.g. Ethernet or alike) e.g. via a switch (e.g. an Ethernet switch), whereby each AP controls one or multiple transceivers (i.e. combined transmitters (optical emitters) and receivers (light sensors)) for optical communication towards EP, e.g., mobile user devices. Respective downlink light beams generated by the transceivers of the APs and defining coverage areas on the plane(s) of the EPs may be steerable.

A central global controller entity or function (provided e.g. in one of the APs (collocated or integrated) or in a LiFi controller) may be connected to a backbone network and configured to manage the LiFi network, which may include interference handling coordination. Interference handling can be implemented by providing time division multiple access (TDMA), wherein medium access control (MAC) cycles of the AP are aligned and divided into slots. Furthermore, the global controller entity may be configured to control handover when one of the EPs moves into and out of overlapping coverage areas of the APs. The global controller entity may be connected via a switch of the backbone network to the APs.

Systems and methods are provided, in which a beam direction is determined (acquisition) for a steerable optical emitter to hit a target detector (i.e., cover the detection area 32 of Fig 1 by the coverage area of the steerable beam 20). The detector may have a feedback mechanism to signal that it has been covered (hit) by a searching beam.

However, for such a hit detection, a minimum amount of signal strength is needed to ensure high reliability. Moreover, the bandwidth of the target detector may be limited. In fact, a photo detector that must be sensitive to capture photons from a large area and needs to do so for photons that come in over a large range of angles needs to have a large surface area. This is a fundamental limitation imposed by the so-called "etendu" restrictions.

Etendue is a property of light in an optical system, which characterizes how "spread-out" the light is in area and angle. Etendue may thus be considered a volume in phase space. It corresponds to the beam parameter product (BPP) in Gaussian beam optics. Other names for etendue include acceptance, throughput, light grasp, light-gathering power, optical extent and the AΩ product. Throughput and AΩ product are especially used in radiometry and radiative transfer where it is related to the view factor (or shape factor).

A perfect optical system produces an image with the same etendue as the source. The etendue is related to the Lagrange invariant and the optical invariant, which share the property of being constant in an ideal optical system. The radiance of an optical system is equal to the derivative of the radiant flux with respect to the etendue. For the systems addressed here, etendue laws require that if we desire to capture a strong signal by using a large detector area (e.g., a large lens) and if we simultaneously want to detect signal from a wide variety of possible incoming angles, the surface of the photo diode cannot be small.

Thus, optical photodiodes with large surface areas have a high capacitance and are slow.

A trade-off for an appropriate choice of a beam width may involve (at least) three challenges: The entendue challenge to make the optical detector with the detection area 32 fast and sensitive to a wide angle in of the steered beam 20 (as above), secondly the desire to keep the outgoing beam width at the emitter of the first LiFi device 10 in the forward system small to ensure a strong signal that can carry a high bit rate, and thirdly the challenge of a transmitter design in the return or feedback channel.

Regarding the third challenge, the feedback signal must be transmitted wirelessly in reverse direction over a link that may not yet know the direction from where the incoming beam arrives, thus the feedback signal needs to be sent out over a wide beam. As this leads to a higher loss of signal strength, the feedback channel may be much slower than the forward channel.

The following embodiments address a solution for these challenges, in particular, the asymmetry of forward and feedback channels.

Fig. 2 shows schematically an architecture of a wireless optical system with a beam scanning area A_{C}, a steerable beam coverage area A_{B} 22 and a capturing area A_{D} 32.

From radar and radio communication using radio waves, it is known that if the system is limited by additive white Gaussian noise (AWGN) and if a matched filter detector is used, the reliability of detecting a pulse depends on the energy in the pulse divided by the noise spectral density. The energy is the integral over time of the pulse amplitude squared. The matched filter theory says that it does not matter how the pulse waveform is composed over time and over frequency.

For the sake of simplification (i.e., uniform power density inside the beam and zero power density outside the beam), it can be assumed that path loss is inversely proportional to the beam coverage area A_{B} 22 and the received signal power is proportional to the receive antenna aperture (i.e., capturing area) A_{D} over the beam width A_{B}.

These considerations can be applied to a beam 20 with a width (i.e., coverage area) A_{B} 22 that scans a total scanning area A_{C} to hit a capturing area 32 of a photo detector of a target receiver 30. **In** optical communication, a detector size (i.e., capturing area A_{D}) can be used as a metric for sensitivity (which corresponds to an antenna gain in a radio systems). To deliver a minimally required energy E, a beam with transmission power P_{T} needs to illuminate the target for at least T₁ seconds: $E = \frac{{A}_{D}}{{A}_{B}} {P}_{T} {T}_{1}$

Here, the minimum required energy E depends on the noise level and on the reliability with which the beam signal needs to be detected. If the spectral noise density is N₀ (in W/Hz), an E/N₀ that is larger than e.g. 10 may be required.

The minimum illumination time T₁ can be interpreted as a dwell time that needs to be spent at every possible location, thus it takes A_{C}/A_{B} times T₁ to search the entire scanning area A_{C}. T₁ can thus be interpreted as a minimum time duration that a signal needs to be resent (or received) to reliably decide that a beam is detected. However, this requires an instantaneous feedback channel that immediately informs the emitter that the current direction is the correct or proper one, i.e., the direction dₚᵣₒₚ indicated in Fig. 2. Usually, the feedback link is orders of magnitude slower.

This asymmetry in bit rates can be handled by adding to the steered forward beam a direction-related address information (e.g., a direction address identification (ID) or direction count or the like) that indicates the current direction Θ_{T} of the steered beam 20, which can be reported back via the feedback channel. However, this requires that the minimum illumination time T₁ is large enough to carry the complete direction-related information (e.g., address ID). The scanning speed and T₁ may be mainly limited by the bandwidth of the feedback channel.

Considering a typical form of optical detectors and their electronic amplifiers used for LiFi, a first detector property is that the signal-to-noise ratio (SNR) is proportional to the square of the received optical power Pₒₚₜ. In fact, the received electrical power P_{RX} after a transimpedance amplifier used for detection is the square of the optical power Pₒₚₜ received by the photodiode. This can be expressed as follows: ${P}_{RX} = {c}_{1} {\left(\frac{{A}_{D}}{{A}_{B}}\right)}^{2} {P}_{opt}^{2} if {A}_{B} > {A}_{D}$ where the constants c1 includes aspects such as responsivity of the photo diode.

The above expression requires that the beam coverage area A_{B} is larger than the capturing area A_{D} of the detector. If A_{D} > A_{B} and the beam coverage area A_{B} falls within the capturing area A_{D} of the detector, the received electrical power is P_{RX}=c₁ Pₒₚₜ² because the photo diode anyhow captures all photons.

Thus, to reduce search time, the beam size (beam coverage area A_{B}) should be small. This leads to a strong instantaneous signal and its effect is squared in the detector system. In fact, the proposed embodiments allow the system to scan fast with a very narrow beam width, possibly not much larger than the detector size, or even smaller than the detector size.

Furthermore, a second property of optical detectors is limited bandwidth. For very small beamwidths, it is not the received power that limits the dwell time but rather the bandwidth of the detector. In such case, it may be decided to increase the number of bits that are embedded in every symbol at the transmitter. Thereby, the direction address ID can be signaled faster within the same bandwidth. However, to carry m bits, the number of signal levels is exponential: M = 2^{m}, which rapidly increases with m. As the required power is proportional to M, the average power rapidly increases with m. To exploit a certain SNR margin, the system can increase m (which consumes the margin exponentially), or it can enlarge the beamwidth (which consumes the margin quadratically).

**In** fact, the bandwidth restriction particularly can be relevant is the acquisition (scan) mode where the receiver needs to be able to capture signals coming from an unknown direction. That typically implies that the detector has a relatively large surface area and may be more limited in bandwidth than a detector that can be designed and optimized for reception from a known direction. An imaging system (e.g., a lens in front of the detector) can ensure that all light from a large capturing area A_{D} maps to a focused spot on the detecting photodiode. But if the angle of arrival Θ_{R} is not known in advance, the place of the spot is unknown, thus a larger detector may be needed. **In** fact, the laws of etendue claim that fundamentally the photodiode area cannot be shrunk if a large capture area *A_{D}* is desired as well as a large spread in the angle of arrival.

The following embodiments focus on the question of how, with a given beamwidth, a given bandwidth and a given power, the system can effectively work with a fast light beam and, at least during the initial acquisition phase of setting up a link, avoid the need of a high bandwidth return channel. Furthermore, coding the address information allow the forward beam to scan in a very effective manner while mitigating the problems imposed by limited signal power and/or limited bandwidth.

A way to accelerate the acquisition process is to allow the scanning beam to move on while the receiver is still in the process of preparing a confirmation that the beam has made a successful contact (i.e., sufficient illumination time has been reached). However, the feedback must then include when, or at what direction the beam has made the successful contact, as meanwhile the beam could have visited hundreds of other positions all of which, except one, are not correct positions.

To cope with this asymmetry between forward channel and feedback channel, it is proposed that the emitter adds or embeds to the scanning beam 20 an address information (e.g., as a payload) and the receiver can signal back this address information via the slower feedback channel. **In** an example, each beam position may carry a different address information. Or, as another example, it is ensured that same position addresses are distributed in a manner that they can be unambiguously linked to a single direction (e.g., based on an address sequence).

Thereby, a very effective and efficient acquisition solution can be provided, which enables a fast way of establishing a directional hit without being hampered by latency in the return channel. The idea could also be used in a satellite that rotates internal mirrors or that rotates along its own axis and thereby sweeps a narrow beam. In such long-haul links, not only the bandwidth of the return channel may be an issue, but also the latency due to the propagation time of light over many kilometers.

In an embodiment, the proposed solution may be implemented in an optical positioning system that uses an output of a pseudo-random sequence, in which every bit in the sequence is projected at a different (possibly partially overlapping) position and in which a detector reads a number of adjacent bits, where that number is at least the log base 2 of the length of the sequence.

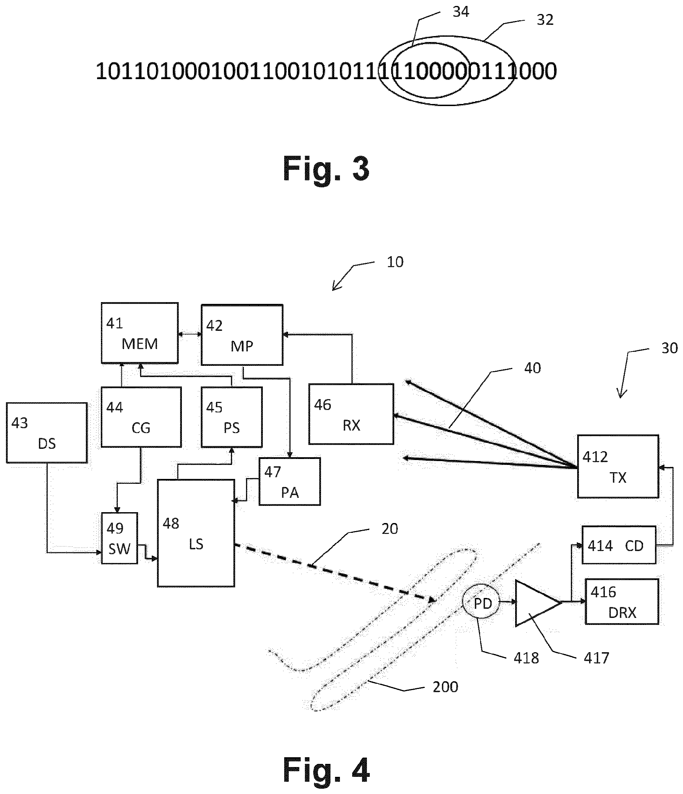

Fig. 3 shows a pseudorandom sequence with a detector window and a minimum window for fast acquisition according to the above embodiment.

As indicated in Fig. 3, the detector captures a portion of the pseudo-random sequence in its capturing area 32. A minimum number of bits indicated by a minimum capturing area 34 is required to uniquely or unambiguously determine the position of the received beam based on the sequence. Excessive bits captured due to the actual capturing area 32 which is larger than the minimum capturing area 34 may optionally be used e.g. for error correction or for detecting a more specific position of the detector within the beam coverage area based on the captured longer sequence of bits.

In an example, the pseudo-random sequence may be generated by a mixed-type feedback shift register (MFSR) with a length L and may have a sequence length 2^{L} -1 (two to the power of L, minus one). Every bit sequence of length L may uniquely determine a different beam position in the code. If more than L bits are received these extra bits can be used to correct errors, as in fact L bits uniquely define the entire rest of the sequence. Other pseudo random sequences may be used, provided that any L bits uniquely determine the position in the sequence of length K, where L is smaller, preferably much smaller than K.

Because sets of L consecutive bits define respective beam positions (in essence the direction, relative to the transmitter, where the receiver was at the time of reception by the receiver), the average detection speed is increased as compared to a system transmitting coordinate packets. For a packet receiver to receive a full coordinate packet, the packet receiver will need to wait for the start of a coordinate packet and then collect all bits from the next coordinate packet. Although a beam might, by chance, for the first time enter the field of regard of the packet receiver at the start of a coordinate package, generally this will not be the case. The probability that it will is lower with larger coordinate package sizes. It is expected that on average the packet receiver will need to wait for the duration of half the coordinate packet size transmission time, assuming a uniform linear progression of the beam along the trajectory.

Moreover, the coordinate packet size also imposes a limitation on the packet transmitter of the prior art, in particular with regard to the speed of progression of the beam along the trajectory. In the worst-case scenario, the beam might first impinge on the packet receiver at the very moment when the second bit (or symbol) of the coordinate packet size has just been sent out. In that situation the packet receiver would need to wait almost a full coordinate packet size transmit duration until the start of the next coordinate packet, for it to be able to then detect a full coordinate packet. This means that the speed with which the light beam is swept along the acquisition pattern will need to be adapted such that the time "spent" within the field of regard of a receiver is at least two times the full coordinate packet transmit duration.

In contrast using the invention, by outputting a continuous stream of bits of the pseudo-random sequence, a receiving device need not wait until it receives a packet header/ the start of a coordinate packet, but instead can, in a "random access" manner, collect L consecutive bits from the incoming data stream. There is no need to wait for the start of a coordinate packet, as any bit received can be used. Moreover, at the transmitter, the sweep speed need only accommodate for receipt of L bits (or symbols) (rather than 2L as described above).

Thus, there is merit in using a source apparatus for controlling an acquisition of a target receiver by a steered beam for optical wireless communication, wherein the source apparatus is configured to: add to the steered beam an address information indicating a current direction or position of the steered beam; control a mixed-type or linear feedback shift register with a length L and a sequence length 2^{L}-1 to generate a pseudo-random sequence; scan by the steered beam a scanning area along a trajectory while outputting a continuous stream of bits of the pseudo-random sequence; and derive a position of the target receiver based on an address information received from the target receiver in a hit report via a feedback channel and wherein every bit sequence of length L uniquely designates a different beam position along the trajectory.

The bit sequence of length L can be used to determine at the transmitter side in which direction the beam was pointing at the time of transmission of the L bit-sequence. Such may be established by "time-stamping" certain parts of the trajectory scan a priori, based on the known operation of the source apparatus and subsequently determine for a bit of the L-bit sequence interpolate when this was transmitted. Based thereon one can then determine where the beam was pointing at the time.

Alternatively, if the specific timing of shift register bit-output and progression along the trajectory is known beforehand, similarly such can be achieved through calculation. Here one may for example first determine the time at which the middle bit(s) of the L bit sequence is(/are) transmitted and then use this to determine the relative direction in which the beam was pointing at that time, and thus infer where the target apparatus is located relative to the source apparatus.

It will be clear to those skilled in the art that this determination does not determine the exact position of the target apparatus, nor does it determine an absolute orientation. However, it does enable the source apparatus to steer the beam towards the same direction where the target apparatus was located.

Likewise there is merit in using a target apparatus for setting up a communication with a source apparatus via a steered beam for optical wireless communication, wherein the target apparatus is configured to: determine a detection of the steered beam by a photo detector during an acquisition scanning phase; derive from the detection an address information embedded in the steered beam and indicating a current direction or position of the steered beam; and transmit the derived address information to the source transmitter in a hit report via a feedback channel; wherein the address information is derived by reading a predetermined number of adjacent bits from the detection, the predetermined number of adjacent bits representing a pseudo-random sequence indicative of a beam position along a trajectory embedded by the source device, and where the predetermined number is at least the log base 2 of the length of the pseudo-random sequence.

In embodiments, the target LiFi device 30 with the target detector and also the scan speed of the source LiFi device 10 with the steerable beam 20 may be configured to allow detection of the address information by reading a predetermined number of adjacent bits at the target LiFi device 30, wherein the predetermined number may be at least a number L of adjacent bits to uniquely determine the position in the code sequence. For any pseudo random sequence, L may be at least the log base 2 of the length of that pseudo-random sequence. A maximum length LFSR sequence achieves this in very good approximation, as its sequence length is 2^{L} - 1, thus it misses only one address out of the possible space of 2^{L} addresses that can be enabled by L bits.

However, there may be at least two reasons for reading more bits: Firstly, depending on the angular scan speed of the source LiFi device 10, the distance and the orientation of the target LiFi device 30, more sequential bits can be read by the target LiFi device 30 anyhow. In such case, taking a middle portion of a longer sequence or of the read bits allows a more accurate determination of the most optimum direction address in the total pseudo random sequence. Secondly, during the design of the system, one may intentionally choose to allow the reading of more sequential bits, to facilitate error correction. This may even imply that the scanning speed is set slightly lower or that the modulation is made intentionally faster beyond the speed at which reliability of detection starts to decline. In an example, a good choice may be to design for at least a few (e.g., 8) bits more than minimally needed for determination of the position in the pseudo random sequence. Having a few bits extra (e.g., a total of L+8) already allows for a good degree of error correction but does not have a significant impact on scanning speed. If the system is optimized for scanning speed, using a few extra bits for error correction implies that system can work while reading of bits is less reliable, so that the energy per received bit can be lowered. This can allow higher modulation speeds and faster scanning. However, an excessive number of bits for error correction may be counterproductive. E.g., if more than 2 times L bits are used, the error correction coding may become less effective than modulating at a slower rate.

In another example, the sequence may be combined with Manchester encoding to allow self-synchronization and immediate estimation of 0 and 1 level, which is even possible when the received beam signal at the detector has varying strength while the steered beam sweeps over the target.

Fig. 4 shows schematically a block diagram of an optical wireless communication system with fast acquisition function according to an embodiment.

In the embodiment, a transmitter 10 (e.g., an AP or other LiFi device) uses a light source (LS) 48 (e.g., LED or laser) to direct a steerable light beam 20 towards a receiver 30 in communication system. The communication system can by switched by an electronic or mechanic or software-based switching element (SW) 49 to add or combine or embed either a user data stream generated by a data source (DS) 43 for communication or a pseudo-random sequence or other direction-related address information generated by a code generator (CG) 44 for acquisition during an acquisition phase.

A receiver 30 (e.g., an EP or other LiFi device or mobile user device) at the receiving end has a transmitter (TX) 412 for providing transmission via a feedback channel 40. The feedback channel 40 can have a lower transmission/data rate (bandwidth) or can have other causes of latency and variability in latency and can be used to provide feedback through a separate channel, e.g., an omnidirectional optical transmission, or an omnidirectional RF transmission (such as Bluetooth Low Energy (BLE), Wi-Fi, or the like.

Furthermore, the receiver 30 comprises a photo detector (PD) 418 (e.g., a semiconductor, PIN or avalanche photo diode, photo transistor or other optical detector chip or the like) for detecting a hit by the light beam 20 as it is steered along a predetermined or random trajectory 200 by a position actuator (PA) 47 of the transmitter 10. Furthermore, the receiver 30 comprises a data receiver (DRX) 416 for receiving the data stream transmitted by the transmitter 12 during a communication phase following the acquisition phase and amplified by an amplifier 417 of the receiver 30.

During the acquisition phase, a code detector (CD) 414 (e.g., a matched filter or other filter or decoder) is used to decrypt a received pattern (i.e., the pseudo-random sequence or other direction-related information) added to, combined with, or embedded in the received beam 20 into its original form from a given code. The derived pseudo-random sequence or other direction-related information is then transmitted back to the transmitter 10 via the feedback channel 40.

The fed-back pseudo-random sequence or other direction-related information is received by a feedback receiver (RX) 46 of the transmitter 10, used for receiving omnidirectional transmissions or RF transmissions (such as Bluetooth Low Energy (BLE), Wi-Fi, or the like from a receiving end.

The received pseudo-random sequence or other direction-related address information is forwarded to a microprocessor (MP) 42 or other processor or controller of the transmitter 10 and may be stored by the microprocessor 42 in a memory (MEM) 41 for later retrieval.

Furthermore, the microprocessor 42 uses the received pseudo-random sequence or other direction-related information to derive the position of a receiver (e.g., the receiver 30) which has been hit by the steerable beam 20 and to control the phase actuator 47 for steering the light beam 20 of the light source 48 to be directed to the derived receiver position e.g. based on a current beam position signaled by a position sensor (PS) 45 and stored in the memory 41.

During the initial acquisition phase, the light source 48 may be controlled (e.g., by the microprocessor 42) to generate the steered beam 20 with a beam-angle wider than that used for communication to sweep a desired scanning area (e.g., a room). As the feedback channel 40 may be far from instantaneous, a report of a hit may arrive with a large and possibly varying latency. This latency and the time resolution of the feedback channel 40 may be so coarse that the transmitter control system (e.g., the microprocessor 42) may not be able to adequately go back to (redetermine) the specific beam setting of the light source 48 that hit the target detector (e.g., the photo detector 418).

According to the embodiment, the transmitter 10 may therefore be controlled (e.g., by the microprocessor 42) to add, combine or embed a stream of code data (i.e., the pseudo-random sequence or other direction-related information) obtained from the code generator 44 to/in the beam 20 and to traverse the search area (i.e., desired scanning area) according to the trajectory 200 at a speed such that a receiving device (e.g., the receiver 30) in the coverage area of the acquisition search will receive a sufficient part of the code data stream to derive a coded current direction of the steered beam 20.

After acquiring the direction of the target detector, a direction-lock towards the target detector can be established and the system can switch to data communication (e.g., with beam tracking). The locked direction may also be intermittently recalibrated (particularly if the resolution that is (much) smaller than the beam width), so that the beam 20 can stay centered to the receiver 30.

In an example, during a sweep operation based on the trajectory 200 in the initial acquisition phase, the transmitter 10 embeds the direction-related address information by modulating the steered light beam 20. The address information (e.g., an address identification (ID)) may be a unique identifier for the position to and/or direction of the target detector. To identify all possible positions of a spot size A_{B} (beam coverage area) in the entire coverage area A_{C}, at least n_{addr} = log₂(A_{C}/ A_{B}) bits are needed.

One option for adding the address information to the steered beam 20 is to use addresses embedded in a data packet, with header and synchronization word. For instance, 8 bits per axis may be used, so that 16 bits are required for a two-dimensional scanning area with axes x and y, plus unique header words for frame synchronization (typically 8 or 16 bits), plus a cyclic redundancy check (CRC) code of 8 bit. Thus, in total, an address packet of 32 bits would be required, wherein the header bits shall not coincide with any data values.

During a search in the acquisition phase, the beam 20 can have a non-zero velocity and can move over the target detector while transmitting its address IDs. As the photo detector may only partially overlap with an area where the full address ID can be recovered, more overlapping beam directions may have to be searched and identified, which may require possibly a few more bits of the address ID. In an example, to guarantee that one full sequence can be detected, the receiving system at the receiver 30 may be configured to receive 64 bits.

As another example, 16 bits per axis may be used (i.e., 32 bits for axes x and y), unique header words for frame synchronization of 16 bits, a CRC check of 8 bit, leading to an addressed identifier packet of 64-bits length. To guarantee that one full sequence can be seen, the photo detector may now need to receive 128 bits.

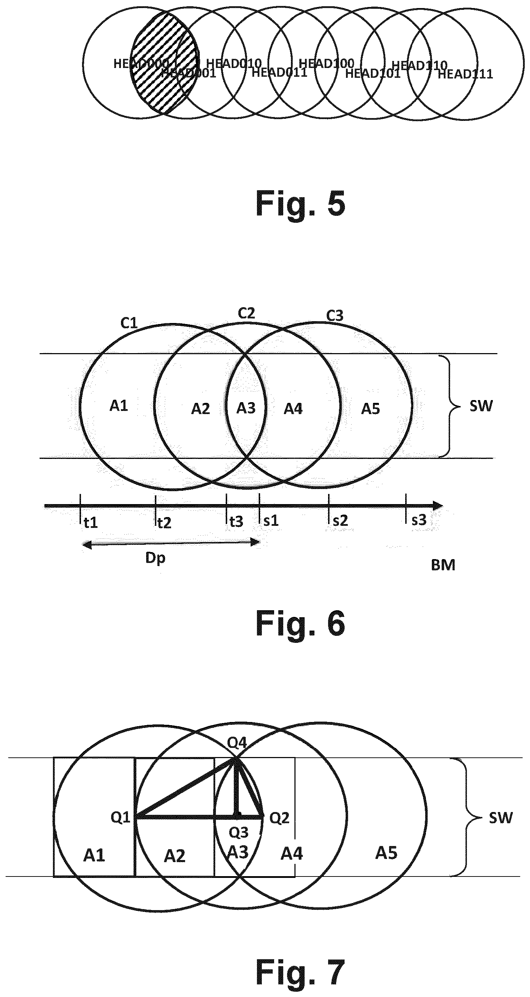

Fig. 5 shows schematically a sequence of beam coverage areas with address IDs along a beam scanning trajectory, as an illustrative example of the proposed concept and its advantages.

In the example of Fig. 5, the address ID of the beam is selected to encode seven positions and uses three bits ("000" to "111") to identify the beam direction. Additionally, a four-symbol header "HEAD" is used as a preamble of the address ID.

The beam may move continuously along the trajectory as the actuation of steering may be orders of magnitude slower than the signaling of data. The circles indicate the area in which a packet with address ID can be received in full at the start of the packet transmission. The circle of the next packet also shows the area where the previous packet can be received at the instant that the packet ends. Thus, the areas where a full packet can be received are the lens-shaped common areas of two subsequent circles. One of these is indicated as the hatched lens-shaped area in Fig. 5. The lens-shaped areas are much smaller than the beam size, as the target detector must lie in the beam at the beginning and at the end of the transmission.

In an embodiment, the transmitter 10 may be an AP and the receiver 30 an EP of an OWC network. In this case, the downlink (AP to EP) transmission may be a high-speed transmission, while the feedback transmitter 412 of the EP(s) may be configured as an omnidirectional emitter and the photo detector 418 of the EP may be configured as an angular diversity receiver.

In an alternative embodiment, the proposed fast acquisition scheme may be used in a peer-to-peer link between two FSO devices, where each FSO device is capable of beam steering. That is, each FSO device at both transmission ends comprises the transmitter 10 and the receiver 30 of Fig. 4. Thereby, each FSO device can be configured to search for the other FSO device using both transmitting and receiving functionalities on board, so that two direction determinations may be initiated either in parallel or sequential. In the latter case, the second determination may make use of a narrower search area when using an angular diversity receiver.

In an embodiment, the transmitter 10 of Fig. 4 may be configured to always scan the entire scanning area with a fixed clock speed and a fixed trajectory 200 of the beam direction. Then, any specific received direction-related address ID may correspond to a specific direction that can be calculated back. The transmitter 10 may also be configured to exhaustively record a list of all addresses and corresponding beam directions in the memory 41, but that may require a memory of 2L-1 address positions for a sequence length of L bits, as explained above.

In another embodiment, the transmitter 10 may be configured to store only a few address points along the trajectory 200. A search may then be performed by clocking the code generator 44 (e.g., a linear feedback shift register (LFSR)) backwards starting from the received address until a stored position is reached. In fact, as the output stream is reversible, a code generator (e.g., LFSR) with mirrored taps may cycle through the output sequence in reverse order.

In a further embodiment, the pseudo noise sequence (e.g., address ID) and the bit clock may be kept fixed, regardless of the beam sweeping speed. When the beam moves slower, the photo detector will see a longer set of bits, thus the receiver 30 can better correct errors.

In a still further embodiment, the mapping of the address ID to the beam position/direction may not be fixed. That is, in another scan another direction may correspond to a particular address ID. The transmitter 10 may be configured to just keep the pseudo-noise sequence of the address ID going and record an outgoing beam position or beam direction per clock cycle, or at some subsampling rate, e.g., once in every 64 clock cycles. The beam positions/directions at these intervals may be interpolated to obtain the final position/direction. In such a set-up, if galvanometer mirrors are uses as/in the position actuator element(s) 47 to steer the beam 20, the beam direction may be monitored by obtaining the beam angle from a feedback of a galvanometer angle sensor, e.g., provided as the position sensor 45.

Further details of suitable galvanometer mirrors are described in Han Woong Yoo et al.: "High speed laser scanning microscopy by iterative learning control of a galvanometer scanner", Control Engineering Practice, volume 50, 2016, pages 12-21, ISSN 0967-0661, where an iterative learning control (ILC) for a galvanometer scanner is proposed to achieve high speed, linear, and accurate bidirectional scanning for scanning laser microscopy. A galvanometer scanner, as a low stiffness actuator, is first stabilized with a feedback control compensating for disturbances and nonlinearities at low frequencies, and ILC is applied for the control of the fast-scanning motion. For stable inversion of the non-minimum phase zeros, a time delay approximation and a zero-phase approximation are used for the design of the ILC, and their attainable bandwidths are analyzed. Experimental results can be used to verify the benefits of ILC of its wide control bandwidth, enabling a faster, more linear, and more accurate scanning without a phase lag and a gain mismatch. At a scan rate of 4112 lines per second, the root mean square (RMS) error of the ILC can be reduced by a factor of 73 in comparison with a feedback-controlled galvanometer scanner of the commercial system.

In an example, for a galvanometer motor and mirror assembly of the position actuator element 47, a small beam diameter scanning galvanometer mirror system may be used, that is operated by a 100Hz square wave, 175Hz triangle or sawtooth, or 250Hz sine wave.

In fact, the trajectory 200 of scanning can be chosen dynamically based on prior information that the transmitter 30 may have stored in the memory 41. Thereby, a user motion may be tracked and if a communication link is lost, the system may scan over a path that first searches at the most likely positions, given the previously observed and stored motion trajectory.

If the transmitter 10 is on a mobile device, it may use its own gyro and acceleration sensors to bias the search towards first checking likely new directions. A Kalman filter and/or particle filter may be used to track most likely new positions, thus calculate best or preferred search directions.

The proposed solution according to various embodiments described herein allows for mechanical latency in the detection loop. Particularly, if scanning is done fast and the beam dwell time is a few nanoseconds, the mechanical beam direction may be desynchronized from the beam modulation process. This may for example happen in feed-forward control loops, where the transmitter 10 is controlled (e.g., by the microprocessor 42) to set the beam 20 to a position near a hit address reported via the feedback channel 40 without correction for errors between the actual beam direction and the beam direction that the transmitter 10 assumes. Then, it is controlled to slowly search near that position at a speed that minimizes overshoot and that allows the system to find a lock position.

In an example, the de-synchronization can be estimated from known mechanical properties e.g. of the beam steering system and/or the scanning can be done in reverse order, so that the desynchronization error may now be the opposite from the first scan.

In another example, the second scanning can be done according to another grid, e.g., 90 degrees rotated. The location of the target detector may then be at the cross section of the first and second search.

In a further embodiment, a closed-loop mirror positioning system may be used, where an angular orientation (position) of a mirror of the position actuator element 47 is optically encoded using an array of photocells and a light source, both of which are integrated into the interior of a galvanometer housing. Each mirror orientation corresponds to a unique ratio of signals from the photodiodes, which allows for the closed-loop operation of the galvanometer mirror system.

In an example, the galvanometer systems may be driven to scan their full mechanical range of ±12.5° at a frequency of 100 Hz when using a square wave control input voltage or at 250 Hz when using a sine wave. For a single small-angle step of 0.2°, it takes the mirror 300 µs to come to a rest at the command position. The scan frequency range may be DC to 1 kHz and the angular resolution may be 0.0008° (15 µrad).

In another example, the galvanometer system may consist of a galvanometer-based scanning motor with an optical mirror mounted on the motor shaft and a detector that provides positional feedback to the control board (e.g., microprocessor 42). A moving magnet design for the galvanometer motors may be chosen over a stationary magnet and rotating coil design in order to provide a fast response time and a high system resonance frequency. The position of the mirror may be encoded using an optical sensing system located inside of the motor housing.

Due to the large angular acceleration of the rotation shaft, the size, shape and inertia of the mirrors may become significant factors in the design of high-performance galvanometer systems. Furthermore, the mirror may need to remain rigid (flat) even when subjected to large accelerations. All these factors need to be balanced to match the characteristics of the galvanometer motor and maximize performance of the system.

The galvanometer mirrors may be coated with silver or gold or may have broadband or high-power dual-band coatings.

In an example, if no communication partner is known, the search pattern of the trajectory 200 may be spiraling out from a historical location to relief scanning mechanics from wear and tear as compared to grid-type line scans. Otherwise, if the communication partner was already known before, the scanning process may be started from a last-known position of the communication partner before spiraling out.

Although the above embodiments have been described in connection with indoor (LiFi) applications, the proposed solution is also advantageously applicable for long-range communication where beam divergences may be in the order of millirads. For instance, if a satellite at several tens, hundreds or thousands of kilometers distance, has a position that before acquisition has an uncertainty of a few kilometers even with prior knowledge on trajectories. The search time for a beam with a width of a fraction of a meter may be very large, as the number of possible locations is very large and the propagation latency in the link is also very large.

Fig. 6 shows schematically a sequence of beam coverage areas and related sub-areas along a scanning trajectory of a beam with address ID.

In Fig. 6, circles C1 C2 C3 represent coverage areas of the beam at the time instants t1, t2 and t3 of the start of packets 1, 2 and 3, respectively. The time instants s1, s2, s3 indicate the respective detection ends of the coverage areas at central observation point. Shown is thus a position of the coverage area of a beam as it evolves over time according to a linear beam motion (BM). A first address ID starts being transmitted at a time when the beam covers circle C1, which includes the sub-areas A1, A2, and A3. The transmission of the second and third address ID starts when the beam takes the position of circle C2 and C3, respectively. To correctly receive a full first address ID, a receiver must see the beam at the beginning instant t1, the end instant s1 and at any intermediate instant. A sufficient condition is that it sees the beam at the beginning instant t1 and at the end instance s1 because this implies that it also sees the beam at any intermediate instant of this time duration (indicated as Dp in Fig. 6). This applies to receivers located in the cross section of C1 and C2, thus in combined area of A2 and A3. Similarly, it can be argued that the second address ID can be received in the cross section of C2 and C3, thus in the combined area of A3 and A4. In area A3 both the first and the second address ID can be detected. This seemingly suggests that the sub-area A3 gives redundant address ID information, and that the sub-area of A3 could be reduced to zero to fully rely on sub-areas A2 and A4 only. However, this is not advantageous, as the width of the area in which the beam is guaranteed to deliver at least one address ID shrinks to zero. In Fig. 6, the scan width SW corresponds to the vertical dimension of sub-area A3.

Fig. 7 shows schematically a sequence of beam coverage areas, related sub-areas A1 to A5 along a beam scanning trajectory, and distances between characteristic points Q1 to Q4 and angle Φ required for determining an optimum scan speed.

Assuming that the bandwidth of the photo detector is a limiting factor and that the time it takes to convey one single address ID is limited to a maximum duration, an optimum scan speed can be calculated. A tradeoff is to optimize beam width and search speed (scan speed). One extreme is to move the beam as fast as possible to ensure that the horizontal displacement is maximum and the scan width goes to zero, such that the area needs to be scanned along many parallel very closely spaced beam paths in case of a grid pattern. The other extreme is to move the beam slowly to ensure a large beam scan width, possibly even close to the beam with, but then the forward progress is small.

Without loss of generality, the radius of the beam coverage area (cross section Cᵢ) can be set to unity. Then, the area A effectively scanned during each address ID transmission within the scan width (SW) equals to: $A = 2 d \left(Q3,Q4\right) d \left(Q1,Q3\right) ,$ where d(Qx,Qy) represents the distance between points Qx and Qy, d(Q3,Q4)=sinΦ and, applying Pythagoras, d²(Q1,Q3)=1-sin²Φ=cos²Φ.

Thus: $A = 2 sin Φ cos Φ = sin 2 Φ ,$ which has a maximum for Φ=45°.

Accordingly, the optimum scan speed is sinΦ = Sqrt2/2 = 0.7 beam radii per duration of an address ID.

For an address ID packet of Nₚ symbols and a maximum data rate rₘ (in symbols per second), the system scans 0.7 times the beam radius R_{beam} per time interval Nₚ/rₘ, and scans an area per second of: $\frac{{R}_{beam}^{2} {r}_{m}}{{N}_{p}}$

In the following embodiment, a long pseudo-random sequence is used (e.g., by the code generator 44 of Fig. 4 for signaling the beam direction/position without a need for header structures. Thereby, the time required for the beam needs to spend above the target photo detector 418 of the receiver 30 can be reduced. In addition, a substantially higher resolution of the position inside the beam can be achieved.

In an example, the address ID may be generated from an LFSR sequence by continuously and uninterruptedly running a linear feedback shift register and use the output sequence as address ID in the steered beam 20.

As already mentioned in connection with Fig. 3, any sub-sequence of L bits uniquely identifies a related position in the long LFSR sequence. In case of any errors in the received sequence, neighboring bits can be used for error correction, as the generation polynomial is known. Thus, the neighboring bits are fully determined by any L sequential bits. If a received longer bit sequence deviates from the generator rules, errors are detected. The most likely correct bit sequence is the one that has the lowest hamming distance to the received sequence.

The photo detector 418 detects (sees) a limited part of the LFSR sequence and is therefore configured so that it detects at least L symbols in any location of the scanning area, where L is the length of the code used for the address ID. Any such L symbols (e.g., bits) uniquely determine the position in the entire code sequence.

If more than L symbols are received, these additional symbols add redundancy and allow error correction or allow a refinement of the resolution in the position estimate.

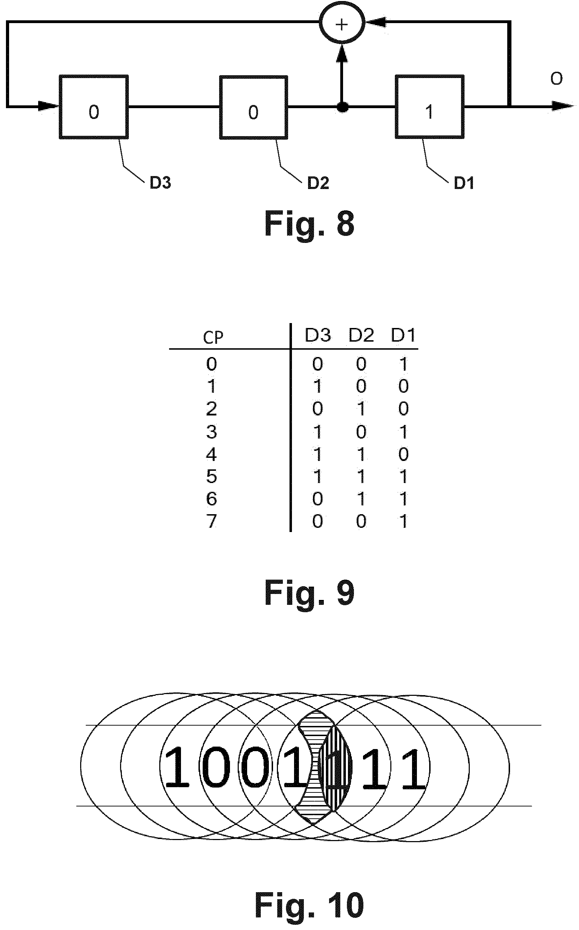

Fig. 8 shows schematically a block diagram of an exemplary LFSR as an example of the code generator 44 of Fig. 4 with a length of three bits.

A shift register is a type of digital circuit using a cascade of flip-flops D1 to D3 (storage locations for one bit), where the output of one flip-flop is connected to the input of the next. They share a single clock signal, which causes the data stored in the system to shift from one location to the next. By connecting the last flip-flop back to the first, the data can cycle within the shifters for extended periods.

In the LFSR of the present example, the output of the second flipflop D2 is logically added to the output of the third flipflop D1 and the result is input to the first flipflop D3, whereby a desired LFSR sequence can be obtained at the output of the third flipflop D1.

In an example, the three flipflops D1 to D3 of the LFSR are set to a seed pattern "001". Then the output at the third flipflop D1 will be a 7-digit sequence "1001011" that repeats continuously.

Fig. 9 shows a table of output values of the LFSR of Fig. 8.
The table shows timing clock pulses CP (0 to 7) and related LSFR outputs at flipflops D3 to D1 for each specific clock pulse. The output values are stored in the flipflops as a buffer content that may leave the LFSR as output during later time instants. These buffer contents may then be allocated to positions where receivers may be located. Output sequences of the LSFR can therefore be used as an address that uniquely identifies a time instant and thus a current position of the steered beam 20.

The output values of the flipflops D3, D2, and D1 can be interpreted as an address in the LFSR sequence. Such addresses have the interesting property that every address has L bits (L=3 here), from which L-1 bits are cyclically shifted bits from the neighboring addresses. In the proposed embodiment, this property can be used in a new context. As the beam 20 progresses along the trajectory 200, these common bits are used in multiple adjacent addresses.

Fig. 10 shows schematically a sequence of beam coverage areas and related symbols along the beam scanning trajectory 200.

The beam 20 progresses along the X-axis (position). Similar to Figs. 5 to 7, the circles indicate the beam area at the start of a corresponding symbol written in the center of each circle. A photo detector positioned in the vertically hatched area receives the symbols "0101". Both sequences "010" and "101" are unique addresses in the longer overall sequence. A photo detector in the horizontally hatched area receives the symbols "010", which still gives a unique position in the sequence.

Performance criteria of the proposed acquisition system may be how many square meters can be scanned per second and at what accuracy the direction or target position can be estimated from such scan.

The proposed LFSR code embedding for signaling beam direction/position is significantly faster than the use of an address ID separated by frame synchronization and error correction codes, because there is no overhead from the synchronization code and other header information. Moreover, the resolution of the LFSR approach is higher by a factor that is approximately equal to the length of the LFSR sequence.

While the address approach with synchronization and header can be used to report the detector position with an accuracy of about one beamwidth, the LFSR approach allows a measurement of the detector position within the beam with a longitudinal accuracy of 1/N times the beam width (where N is the number of symbols "across the beam width") and a lateral accuracy of about Sqrt2 times beam width.

In an example, the LFSR address sequence can be used for error correction by exploiting the fact that the code of the address ID is generated by an LFSR of length L, according to a feedback polynomial that is known at the receiver 30. Thus, during every clock cycle, a parity bit can be generated over a subset of the previous L bits, namely over those bits that appear in the feedback polynomial, which are XOR-ed to generate the next input.

An algorithm to find the position/direction at which the receiver was hit by the moving beam is to feed the first received bits of the address ID into an LFSR at the receiver 30 and to compare the predicted next values to the received values. If a mismatch occurs, either the newly received bit is wrong or one of the already received bits that participated in the generation of the newly received bit. This gives a number of bits that are suspected of being wrong. By continuing the reception of more bits, with every new bit, one more "XOR-equation" becomes available. Depending on how many errors occur simultaneously and on how many extra bits are received, it may even be possible to repair incorrectly received bits.

In a further embodiment, a (differential) Manchester code may be used by the code generator 44 of the transmitter 10 to obtain the address ID.

The differential Manchester (DM) code is a line code in digital frequency modulation in which data and clock signals are combined to form a single two-level self-synchronizing data stream. In various specific applications, this method is also called by various other names, including bi-phase mark code (CC), F2F (frequency/double frequency), Aiken bi-phase, and conditioned bi-phase.

This specific type of code avoids missing zeros at the beginning or end of a hit and balances DC components in short run lengths. If on-off keying (OOK) were used for code transmission, the photo detector 44 may not be able to distinguish initially received first symbols if these were set to zero. In fact, no difference in received signal exists between a beam that is not hitting the detector and a logical zero in a beam that does hit the detector. Similarly, at the end of the hit, zeros would not be distinguishable from a beam that is already out of the detector area. A line code can be used to avoid this. The Manchester code is a very effective line code that associates a powered signal, both with a logical zero and a logical one.

Thereby, improved synchronization can be achieved even in case of address IDs with short sequences.

Moreover, with bi-phase encoding such as (differential) Manchester encoding, the receiver 30 receives a reference zero and a one value during every symbol period to be able to follow variations of the received signal strength, for instance between the center and the outskirts of the received beam.

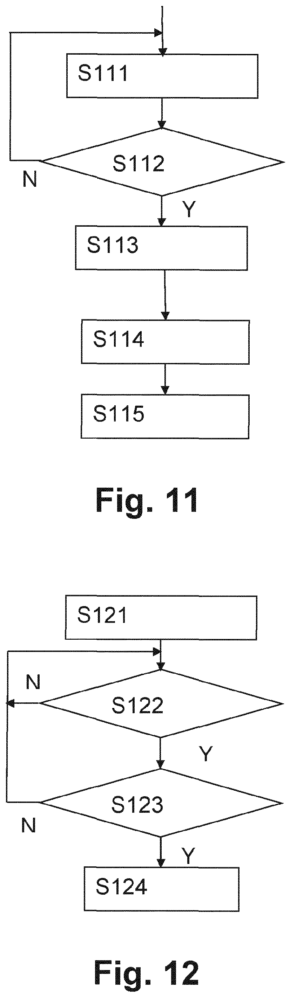

Fig. 11 shows a summarizing flow diagram of a fast acquisition procedure at a transmitter according to an embodiment, which may be executed e.g. by the microprocessor 42 of Fig. 4 based on instructions stored in the memory 41 of Fig. 4.

In an initial step S111, a pseudo-random sequence is embedded as a direction-related address ID to a beam generated by a light source and the beam is scanned along a predetermined or random trajectory for acquisition.

Then, in step S112 it is checked whether a hit with a direction-related code (address ID) is reported from another transmission via a feedback channel.

If not, the procedure jumps back to step S111 and the scanning process is continued.

Otherwise, if it is determined in step S112 that a hit has been reported via the feedback channel, the procedure proceeds to step S113 where a position of the reporting hit detector is derived based on the embedded code signaled in the report. This may be achieved e.g. by a memory look-up procedure and may include an error correction process.

In subsequent step S114, the beam direction is fixedly set (locked) to the derived position of the hit detector. Optionally, a fine adjustment (loop) may be activated to optimize the retrieved direction.

Finally, in step S115, the transmitter switches to data communication and a tracking mechanism for tracking any movements of the hit detector. I.e., once the beam has found a hit and has converged to a locked communication link, the tracking may be achieved by other schemes or mechanisms, such as the use of a quad quadrant detector.

Fig. 12 shows a summarizing flow diagram of a fast acquisition procedure at a receiver side according to an embodiment, which may be executed by a microprocessor (not shown in Fig. 4) of the receiver based on instructions stored in a memory (not shown in Fig. 4) of the receiver.

In step S121, a photo detector at the receiver is activated to allow hit detection.

Then in step S122 the receiver checks whether a hit of beam has been detected by the photo detector. If not, the procedure jumps back to step S121 and the photo detector remains activated and ready for detection.

Otherwise, if a hit has been detected by the photo detector, the procedure proceeds to step S133 where the receiver checks e.g. based on a look-up table whether a valid address ID has been detected during the hit. If not, the procedure jumps back to step S121 and the photo detector remains activated and ready for detection.

Otherwise, if a valid address ID has been detected by the photo detector during the hit, the procedure proceeds to step S124 where the receiver is controlled to transmit the received valid address ID via feedback channel to the transmitter.

Thereby, the transmitter is enabled to direct its beam towards the receiver and start a data communication with the receiver.

To summarize, target acquisition methods and systems for steerable light beams in OWC or FSO systems have been described, wherein a duration during which a steerable light beam of a transmitter must illuminate an optical detector at a receiver for acquisition can be minimized and a slow feedback channel from the receiver to the transmitter can be allowed. In an example, this can be achieved by emitting a pseudo-random sequence with a property that knowledge of a small number of bits uniquely predicts the entire sequence. In another example, a linear feedback shift register sequence is an appropriate and very efficient choice.

The trajectory as used herein may be described as either a scan path and/or alternatively as a sequence of variations in beam direction used. Using the scan-path approach, the trajectory corresponds to the locations subsequently illuminated by the beam, where we expect a communication partner. Using the direction approach in contrast the same trajectory corresponds to a sequence of variations in beam direction used to find a communication partner.

Intuitively a trajectory may for example be defined as the scan path on the floor followed by the beam while scanning an (empty) room. As communication partners typically will not be on the "floor surface", but more likely on table-top height, the trajectory should preferably scan the room a height of e.g. approximately 1 meter, but as indicated this depends on where we expect communication partners.

When we take a bird's-eye view, the trajectory may describe a path that uses a fast horizontal left-to-right scan and right-to-left scan (which are iterated) in combination with a slow top-to-bottom scan. The trajectory in this case could be described as the scan path on the surface at e.g. 1 meter high.

This scan path however is equivalent to the sequence of beam direction changes using a fast horizontal left-to-right scan and right-to-left scan (which are iterated) in combination with a slow top-to-bottom scan. Therefore, both approaches may be used to equal effect when describing a trajectory.

Although the above highlighted "zig-zag" trajectory is a simple pattern, many alternatives are possible. For example, instead of using the "zig-zag" pattern, one may also start the scan at the room center and spiral outwards, this trajectory has the advantage that if communication partners are more likely to be present at the room center, detection may occur sooner. Many more variations are possible including patterns wherein some locations are covered more often than others.

While the invention has been illustrated and described in detail in the drawings and foregoing description, such illustration and description are to be considered illustrative or exemplary and not restrictive. The invention is not limited to the disclosed LiFi-based embodiments but may be applied to all kinds of optical wireless networks with steerable light beams.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

A single unit or device may fulfill the functions of several items recited in the claims. The mere fact that certain measures are recited in mutually different dependent claims does not indicate that a combination of these measures cannot be used to advantage.

The described operations like those indicated in Figs. 11 and 12 can be implemented as program code means of a computer program and/or as dedicated hardware of the transmitter devices, receiver devices or transceiver devices, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. A source apparatus for controlling an acquisition of a target receiver (30) by a steered beam (20) for optical wireless communication, wherein the source apparatus is configured to:
add to the steered beam (20) an address information indicating a current direction or position of the steered beam (20);
control a mixed-type or linear feedback shift register with a length L and a sequence length 2^{L}-1 to generate a pseudo-random sequence;
scan by the steered beam (20) a scanning area along a trajectory (200) while outputting a continuous stream of bits of the pseudo-random sequence; and
derive a position of the target receiver based on an address information received from the target receiver (30) in a hit report via a feedback channel (40) and wherein every bit sequence of length L uniquely designates a different beam position along the trajectory.

2. The source apparatus of claim 1, wherein the source apparatus is configured to continue the scanning by the steered beam (20) without waiting for the receipt of the hit report.

3. The source apparatus of claim 1, wherein the source apparatus is configured to combine the pseudo-random sequence using Manchester encoding.

4. The source apparatus of claim 1, wherein the source apparatus is configured to generate the steered beam (20) with a wider beam coverage area (22) than that used for communication with the target receiver (30) after the acquisition.

5. The source apparatus of claim 1, wherein the source apparatus is configured to set the number of bits of the address information at least to log₂(A_{C}/A_{B}), wherein A_{C} denotes the size of the scanning area and A_{B} denotes the size of a coverage area of the steered beam (20).

6. The source apparatus of claim 1, wherein the source apparatus is configured to set the scanning speed of the steered beam (20) to 0.7 beam radii of the steered beam (20) per duration of the address information.

7. The source apparatus of claim 1, wherein the source apparatus is configured to select the trajectory (200) dynamically based on prior address information stored in a memory (41).

8. A Optical Wireless Communication, OWC, device comprising:
a source apparatus (10) according to claim 1 and
a target apparatus for setting up a communication with a further source apparatus at the target receiver (30) via a further steered beam for optical wireless communication, wherein the target apparatus is configured to:
determine a detection of the further steered beam by a photo detector (418) during an acquisition scanning phase;
derive from the detection an address information embedded in the further steered beam and indicating a current direction or position of the further steered beam ; and
transmit the derived address information to the further source apparatus in a further hit report via a feedback channel (40); and
wherein the address information is derived by reading a predetermined number of adjacent bits from the detection, the predetermined number of adjacent bits representing a pseudo-random sequence indicative of a beam position along a trajectory embedded by the further source apparatus, and where the predetermined number is at least the log base 2 of the length of the pseudo-random sequence.

9. The OWC device of claim 8, wherein the target apparatus is configured to capture more than the predetermined number of bits due to a capturing area (32) of the photo detector (418), that is larger than a minimum capturing area (34), and to use excessive bits for error correction or for detecting a more specific position of the photo detector (418) within a beam coverage area (22) of the further steered beam.

10. The OWC device (10, 30) of claim 8 or 9, further comprising a position actuator element (47) having at least one galvanometer mirror for steering the steered beam (20).

11. An optical wireless communication, OWC, system comprising at least a first OWC device (10) with a source apparatus according to claim 1 and a second OWC device (30) comprising a further target apparatus for setting up a communication with the first OWC device via the steered beam,
the further target apparatus configured to:
determine a detection of the steered beam by a photo detector (418) during an acquisition scanning phase;
derive from the detection an address information embedded in the steered beam and indicating a current direction or position of the steered beam; and
transmit the derived address information to the source apparatus in the hit report via the feedback channel (40); and
wherein the address information is derived by reading a predetermined number of adjacent bits from the detection, the predetermined number of adjacent bits representing a pseudo-random sequence indicative of a beam position along a trajectory embedded by the source apparatus, and where the predetermined number is at least the log base 2 of the length of the pseudo-random sequence.

12. A method of controlling an acquisition of a target receiver (30) by a steered beam (20) originating from a source apparatus (10) of an OWC device for optical wireless communication, wherein the method comprises the source apparatus (10):
- adding to the steered beam (20) an address information indicating a current direction or position of the steered beam (20);
- controlling a mixed-type or linear feedback shift register with a length L and a sequence length 2^{L}-1 to generate a pseudo-random sequence;
- scanning by the steered beam (20) a scanning area along a trajectory (200) while outputting a continuous stream of bits of the pseudo-random sequence; and
- deriving a position of the target receiver (30) based on an address information received from the target receiver (30) in a hit report via a feedback channel (40) and
wherein every bit sequence of length L uniquely designates a different beam position along the trajectory.

13. The method of claim 11, wherein the OWC device further comprises a target apparatus from the OWC device and the method comprises the target apparatus:
- determining a detection of a further steered beam from a further source apparatus of the target receiver (30) by a photo detector (418) during an acquisition scanning phase;
- deriving from the detection an address information embedded in the further steered beam (20) and indicating a current direction or position of the further steered beam (20); and
- transmitting the derived address information to the further source transmitter (10) in a further hit report via a feedback channel (40)
wherein the address information is derived by reading a predetermined number of adjacent bits from the detection, the predetermined number of adjacent bits representing a pseudo-random sequence indicative of a beam position along a trajectory embedded by the further source apparatus, and where the predetermined number is at least the log base 2 of the length of the pseudo-random sequence.

## Patentansprüche

1. Quelleneinrichtung zum Steuern einer Akquisition eines Zielempfängers (30) durch einen gelenkten Strahl (20) für optische drahtlose Kommunikation, wobei die Quelleneinrichtung konfiguriert ist zum:
Hinzufügen von Adressinformationen zu dem gelenkten Strahl (20), die eine aktuelle Richtung oder Position des gelenkten Strahls (20) angeben;
Steuern eines Rückkopplungsschieberegisters einer gemischten oder linearen Art mit einer Länge L und einer Sequenzlänge 2^{L}-1, um eine Pseudozufallssequenz zu erzeugen;
Abtasten eines Abtastbereichs entlang einer Trajektorie (200) durch den gelenkten Strahl (20), während ein kontinuierlicher Strom von Bits der Pseudozufallssequenz ausgegeben wird; und
Ableiten einer Position des Zielempfängers basierend auf Adressinformationen, die von dem Zielempfänger (30) in einem Trefferbericht über einen Rückkopplungskanal (40) empfangen werden, und
wobei jede Bitsequenz der Länge L eindeutig eine andere Strahlposition entlang der Trajektorie bezeichnet.

2. Quelleneinrichtung nach Anspruch 1, wobei die Quelleneinrichtung konfiguriert ist, um das Abtasten durch den gelenkten Strahl (20) fortzusetzen, ohne auf den Empfang der Treffermeldung zu warten.

3. Quelleneinrichtung nach Anspruch 1, wobei die Quelleneinrichtung konfiguriert ist, um die Pseudozufallssequenz unter Verwendung von Manchestercodierung zu kombinieren.

4. Quelleneinrichtung nach Anspruch 1, wobei die Quelleneinrichtung konfiguriert ist, um den gelenkten Strahl (20) mit einem breiteren Strahlabdeckungsbereich (22) als demjenigen zu erzeugen, der nach der Akquisition für eine Kommunikation mit dem Zielempfänger (30) verwendet wird.

5. Quelleneinrichtung nach Anspruch 1, wobei die Quelleneinrichtung konfiguriert ist, um die Anzahl von Bits der Adressinformationen auf mindestens log₂(A_{C}/A_{B}) einzustellen, wobei A_{C} die Größe des Abtastbereichs bezeichnet und A_{B} die Größe eines Abdeckungsbereichs des gelenkten Strahls (20) bezeichnet.

6. Quelleneinrichtung nach Anspruch 1, wobei die Quelleneinrichtung konfiguriert ist, um die Abtastgeschwindigkeit des gelenkten Strahls (20) auf 0,7 Strahlradien des gelenkten Strahls (20) pro Dauer der Adressinformationen einzustellen.

7. Quelleneinrichtung nach Anspruch 1, wobei die Quelleneinrichtung konfiguriert ist, um die Trajektorie (200) basierend auf vorherigen Adressinformationen dynamisch auszuwählen, die in einem Speicher (41) gespeichert sind.

8. Optische drahtlose Kommunikationsvorrichtung, OWC-Vorrichtung, umfassend:
eine Quelleneinrichtung (10) nach Anspruch 1; und
eine Zieleinrichtung zum Aufbauen einer Kommunikation mit einer weiteren Quelleneinrichtung an dem Zielempfänger (30) über einen weiteren gelenkten Strahl für optische drahtlose Kommunikation, wobei die Zieleinrichtung konfiguriert ist zum:
Bestimmen einer Erfassung des weiteren gelenkten Strahls durch einen Fotodetektor (418) während einer Akquisitionsabtastphase;
Ableiten aus der Erfassung von Adressinformationen, die in dem weiteren gelenkten Strahl eingebettet sind und eine aktuelle Richtung oder Position des weiteren gelenkten Strahls angeben; und
Senden der abgeleiteten Adressinformationen an die weitere Quelleneinrichtung in einem weiteren Trefferbericht über einen Rückkopplungskanal (40); und
wobei die Adressinformationen durch Ablesen einer vorbestimmten Anzahl von benachbarten Bits aus der Erfassung abgeleitet werden, wobei die vorbestimmte Anzahl von benachbarten Bits eine Pseudozufallssequenz darstellt, die eine Strahlposition entlang einer Trajektorie angibt, die durch die weitere Quelleneinrichtung eingebettet ist, und wobei die vorbestimmte Anzahl mindestens der Logarithmus zur Basis 2 der Länge der Pseudozufallssequenz ist.

9. OWC-Vorrichtung nach Anspruch 8, wobei die Zieleinrichtung konfiguriert ist, um aufgrund eines Aufnahmebereichs (32) des Fotodetektors (418), der größer als ein Mindestaufnahmebereich (34) ist, mehr als die vorbestimmte Anzahl von Bits aufzunehmen und überschüssige Bits für eine Fehlerbehebung oder zum Erfassen einer spezifischeren Position des Fotodetektors (418) innerhalb eines Strahlabdeckungsbereichs (22) des weiteren gelenkten Strahls zu verwenden.

10. OWC-Vorrichtung (10, 30) nach Anspruch 8 oder 9, ferner umfassend ein Positionsaktuatorelement (47), das mindestens einen Galvanometerspiegel zum Lenken des gelenkten Strahls (20) aufweist.

11. Optisches drahtloses Kommunikationssystem, OWC-System, umfassend mindestens eine erste OWC-Vorrichtung (10) mit einer Quelleneinrichtung nach Anspruch 1 und eine zweite OWC-Vorrichtung (30), umfassend eine weitere Zieleinrichtung zum Aufbauen einer Kommunikation mit der ersten OWC-Vorrichtung über den gelenkten Strahl,
die weitere Zieleinrichtung, die konfiguriert ist zum:
Bestimmen einer Erfassung des gelenkten Strahls durch einen Fotodetektor (418) während einer Akquisitionsabtastphase;
Ableiten aus der Erfassung von Adressinformationen, die in dem gelenkten Strahl eingebettet sind und eine aktuelle Richtung oder Position des gelenkten Strahls angeben; und
Senden der abgeleiteten Adressinformationen an die Quelleneinrichtung in dem Trefferbericht über den Rückkopplungskanal (40); und
wobei die Adressinformationen durch Ablesen einer vorbestimmten Anzahl von benachbarten Bits aus der Erfassung abgeleitet werden, wobei die vorbestimmte Anzahl von benachbarten Bits eine Pseudozufallssequenz darstellt, die eine Strahlposition entlang einer Trajektorie angibt, die durch die Quelleneinrichtung eingebettet ist, und wobei die vorbestimmte Anzahl mindestens der Logarithmus zur Basis 2 der Länge der Pseudozufallssequenz ist.

12. Verfahren zum Steuern einer Akquisition eines Zielempfängers (30) durch einen gelenkten Strahl (20), der von einer Quelleneinrichtung (10) einer OWC-Vorrichtung für optische drahtlose Kommunikation ausgeht, wobei das Verfahren die Quelleneinrichtung (10) umfasst:
- Hinzufügen von Adressinformationen, die eine aktuelle Richtung oder Position des gelenkten Strahls (20) angeben, zu dem gelenkten Strahl (20);
- Steuern eines Rückkopplungsschieberegisters der gemischten oder linearen Art mit einer Länge L und einer Sequenzlänge 2^{L}-1, um eine Pseudozufallssequenz zu erzeugen;
- Abtasten eines Abtastbereichs entlang einer Trajektorie (200) durch den gelenkten Strahl (20) während des Ausgebens eines kontinuierlichen Stroms von Bits der Pseudozufallssequenz; und
- Ableiten einer Position des Zielempfängers (30) basierend auf Adressinformationen, die von dem Zielempfänger (30) in einer Treffermeldung über einen Rückkopplungskanal (40) empfangen werden, und
wobei jede Bitsequenz der Länge L eindeutig eine andere Strahlposition entlang der Trajektorie bezeichnet.

13. Verfahren nach Anspruch 11, wobei die OWC-Vorrichtung ferner eine Zieleinrichtung von der OWC-Vorrichtung umfasst und das Verfahren die Zieleinrichtung umfasst:
- Bestimmen einer Erfassung eines weiteren gelenkten Strahls von einer weiteren Quelleneinrichtung des Zielempfängers (30) durch einen Fotodetektor (418) während einer Akquisitionsabtastphase;
- Ableiten von Adressinformationen aus der Erfassung, die in dem weiteren gelenkten Strahl (20) eingebettet sind und eine aktuelle Richtung oder Position des weiteren gelenkten Strahls (20) angeben; und
- Senden der abgeleiteten Adressinformationen an den weiteren Quellensender (10) in einem weiteren Trefferbericht über einen Rückkopplungskanal (40)
wobei die Adressinformationen durch Ablesen einer vorbestimmten Anzahl von benachbarten Bits aus der Erfassung abgeleitet werden, wobei die vorbestimmte Anzahl von benachbarten Bits eine Pseudozufallssequenz darstellt, die eine Strahlposition entlang einer Trajektorie angibt, die durch die weitere Quelleneinrichtung eingebettet ist, und wobei die vorbestimmte Anzahl mindestens der Logarithmus zur Basis 2 der Länge der Pseudozufallssequenz ist.

## Revendications

1. Appareil source permettant de commander une acquisition d'un récepteur cible (30) par un faisceau orienté (20) pour une communication optique sans fil, dans lequel l'appareil source est configuré pour :
ajouter au faisceau orienté (20) des informations d'adresse indiquant une direction ou position actuelle du faisceau orienté (20) ;
commander un registre à décalage à rétroaction de type mixte ou linéaire avec une longueur L et une longueur de séquence 2^{L}-1 pour générer une séquence pseudoaléatoire ;
balayer par le faisceau orienté (20) une zone de balayage le long d'une trajectoire (200) tout en délivrant en sortie un flux continu de bits de la séquence pseudoaléatoire ; et
dériver une position du récepteur cible en fonction d'informations d'adresse reçues du récepteur cible (30) dans un rapport de correspondance par l'intermédiaire d'un canal de rétroaction (40) et
dans lequel chaque séquence de bits de longueur L désigne de façon unique une position de faisceau différente le long de la trajectoire.

2. Appareil source selon la revendication 1, dans lequel l'appareil source est configuré pour continuer le balayage par le faisceau orienté (20) sans attendre la réception du rapport de correspondance.

3. Appareil source selon la revendication 1, dans lequel l'appareil source est configuré pour combiner la séquence pseudoaléatoire à l'aide d'un encodage de Manchester.

4. Appareil source selon la revendication 1, dans lequel l'appareil source est configuré pour générer le faisceau orienté (20) avec une zone de couverture de faisceau (22) plus grande que celle utilisée pour une communication avec le récepteur cible (30) après l'acquisition.

5. Appareil source selon la revendication 1, dans lequel l'appareil source est configuré pour régler le nombre de bits des informations d'adresse au moins sur log₂(A_{C}/A_{B}), dans lequel A_{C} désigne la taille de la zone de balayage et A_{B} désigne la taille d'une zone de couverture du faisceau orienté (20).

6. Appareil source selon la revendication 1, dans lequel l'appareil source est configuré pour régler la vitesse de balayage du faisceau orienté (20) à 0,7 rayon de faisceau du faisceau orienté (20) par durée des informations d'adresse.

7. Appareil source selon la revendication 1, dans lequel l'appareil source est configuré pour sélectionner la trajectoire (200) dynamiquement en fonction d'informations d'adresse préalables stockées dans une mémoire (41).

8. Dispositif de communication optique sans fil, OWC, comprenant :
un appareil source (10) selon la revendication 1 et
un appareil cible permettant d'établir une communication avec un appareil source supplémentaire au niveau du récepteur cible (30) par l'intermédiaire d'un faisceau orienté supplémentaire pour une communication optique sans fil, dans lequel l'appareil cible est configuré pour :
déterminer une détection du faisceau orienté supplémentaire par un photodétecteur (418) pendant une phase de balayage d'acquisition ;
dériver de la détection des informations d'adresse intégrées dans le faisceau orienté supplémentaire et indiquant une direction ou position actuelle du faisceau orienté supplémentaire ; et
transmettre les informations d'adresse dérivées à l'appareil source supplémentaire dans un rapport de correspondance supplémentaire par l'intermédiaire d'un canal de rétroaction (40) ; et
dans lequel les informations d'adresse sont dérivées en lisant un nombre prédéterminé de bits adjacents provenant de la détection, le nombre prédéterminé de bits adjacents représentant une séquence pseudoaléatoire indiquant une position de faisceau le long d'une trajectoire intégrée par l'appareil source supplémentaire, et où le nombre prédéterminé vaut au moins le log en base 2 de la longueur de la séquence pseudoaléatoire.

9. Dispositif OWC selon la revendication 8, dans lequel l'appareil cible est configuré pour capturer plus du nombre prédéterminé de bits dus à une zone de capture (32) du photodétecteur (418), qui est plus grande qu'une zone de capture minimale (34), et pour utiliser les bits en excès pour une correction d'erreurs ou pour la détection d'une position plus spécifique du photodétecteur (418) au sein d'une zone de couverture de faisceau (22) du faisceau orienté supplémentaire.

10. Dispositif OWC (10, 30) selon la revendication 8 ou 9, comprenant en outre un élément actionneur de position (47) ayant au moins un miroir galvanomètre permettant d'orienter le faisceau orienté (20).

11. Système de communication optique sans fil, OWC comprenant au moins un premier dispositif OWC (10) avec un appareil source selon la revendication 1 et un second dispositif OWC (30) comprenant un appareil cible supplémentaire permettant d'établir une communication avec le premier dispositif OWC par l'intermédiaire du faisceau orienté,
l'appareil cible supplémentaire étant configuré pour :
déterminer une détection du faisceau orienté par un photodétecteur (418) pendant une phase de balayage d'acquisition ;
dériver de la détection des informations d'adresse intégrées dans le faisceau orienté et indiquant une direction ou position actuelle du faisceau orienté ; et
transmettre les informations d'adresse dérivées à l'appareil source dans le rapport de correspondance par l'intermédiaire du canal de rétroaction (40) ; et
dans lequel les informations d'adresse sont dérivées en lisant un nombre prédéterminé de bits adjacents provenant de la détection, le nombre prédéterminé de bits adjacents représentant une séquence pseudoaléatoire indiquant une position de faisceau le long d'une trajectoire intégrée par l'appareil source, et où le nombre prédéterminé vaut au moins le log en base 2 de la longueur de la séquence pseudoaléatoire.

12. Procédé de commande d'une acquisition d'un récepteur cible (30) par un faisceau orienté (20) ayant pour origine un appareil source (10) d'un dispositif OWC pour une communication optique sans fil, dans lequel le procédé comprend l'appareil source (10) :
- ajoutant au faisceau orienté (20) des informations d'adresse indiquant une direction ou position actuelle du faisceau orienté (20) ;
- commandant un registre à décalage à rétroaction de type mixte ou linéaire avec une longueur L et une longueur de séquence 2^{L}-1 pour générer une séquence pseudoaléatoire ;
- balayant par le faisceau orienté (20) une zone de balayage le long d'une trajectoire (200) tout en délivrant en sortie un flux continu de bits de la séquence pseudoaléatoire ; et
- dérivant une position du récepteur cible (30) en fonction d'informations d'adresse reçues en provenance du récepteur cible (30) dans un rapport de correspondance par l'intermédiaire d'un canal de rétroaction (40) et
dans lequel chaque séquence de bits de longueur L désigne de façon unique une position de faisceau différente le long de la trajectoire.

13. Procédé selon la revendication 11, dans lequel le dispositif OWC comprend en outre un appareil cible provenant du dispositif OWC et le procédé comprend l'appareil cible :
- déterminant une détection d'un faisceau orienté supplémentaire en provenance d'un appareil source supplémentaire du récepteur cible (30) par un photodétecteur (418) pendant une phase de balayage d'acquisition ;
- dérivant de la détection des informations d'adresse intégrées dans le faisceau orienté supplémentaire (20) et indiquant une direction ou position actuelle du faisceau orienté supplémentaire (20) ; et
- transmettant les informations d'adresse dérivées au transmetteur source supplémentaire (10) dans un rapport de correspondance supplémentaire par l'intermédiaire d'un canal de rétroaction (40)
dans lequel les informations d'adresse sont dérivées en lisant un nombre prédéterminé de bits adjacents provenant de la détection, le nombre prédéterminé de bits adjacents représentant une séquence pseudoaléatoire indiquant une position de faisceau le long d'une trajectoire intégrée par l'appareil source supplémentaire, et où le nombre prédéterminé vaut au moins le log en base 2 de la longueur de la séquence pseudoaléatoire.
